Europäisches Patentamt

European Patent Office

Office européen des brevets

(19)

(11) Publication number: **0 110 561**
**B1**

(12) **EUROPEAN PATENT SPECIFICATION**

(45) Date of publication of patent specification: **30.03.88**

(51) Int. Cl.⁴: **H 02 K 17/08,** H 02 P 7/62

(21) Application number: **83306542.8**

(22) Date of filing: **27.10.83**

(54) **Rotary machine system having an electric motor controlled by a modulated exciting voltage.**

(30) Priority: **27.10.82 JP 188838/82**
**13.12.82 JP 218127/82**
**04.02.83 JP 17245/83**
**21.07.83 JP 133164/83**

(43) Date of publication of application:
**13.06.84 Bulletin 84/24**

(45) Publication of the grant of the patent:
**30.03.88 Bulletin 88/13**

(84) Designated Contracting States:
**DE FR GB**

(56) References cited:
**DE-A-2 628 969**
**GB-A-1 111 300**
**GB-A-1 372 595**
**GB-A-2 034 938**

(73) Proprietor: **Take, Takashi**
**20-13 Daita 5-chome**
**Setagaya-ku Tokyo (JP)**

(72) Inventor: **Take, Takashi**
**20-13 Daita 5-chome**
**Setagaya-ku Tokyo (JP)**

(74) Representative: **Beresford, Keith Denis Lewis**
**et al**
**BERESFORD & Co. 2-5 Warwick Court High**
**Holborn**
**London WC1R 5DJ (GB)**

Courier Press, Leamington Spa, England.

**Description**

A first aspect of this invention relates to an electric motor apparatus of the type comprising an electric motor having a stator and a rotor with a closed-circuited winding, and a power supply for supplying alternating excitation currents to a plurality of windings of the stator which are phased with respect to each other.

A second aspect of this invention relates to a method of producing a motor effect of the kind comprising generating from a first of two relatively rotatable members a magnetic flux which rotates relative to that member and interacting the flux with a winding of the second member to cause relative rotation of the two members synchronised with the relative rotation of the flux and first member. This kind of method is used in a synchronous motor.

A third aspect of this invention relates to a method of producing a motor effect of the kind comprising generating from a first of two relatively rotatable members a magnetic flux which rotates relative to that member, and interacting the flux with a winding of the second member to induce a reaction in the second member to cause relative rotation of the two members. This kind of method is used in the induction motor.

While conventional motors have a history of over a century, their fundamental operating theory remains unchanged even at present. That is, the materials, constructions and capacities of the motors have changed, but their underlying principle remains at an extension of the original theory. In various industrial techniques, an electrical technique has undergone most revolutionary renovations, but there has never devised and demonstrated a unique motor which is based upon a novel theory exceeding a common sense in the field of electrical engineering.

With regard to applications techniques of electric motors, extensive studies and experiments have been conducted in order to develop new electric motors which find many applications in various fields. The conventional motors whose speed can now be controlled with a higher degree of precision are used in many advanced technical fields. As compared with, for instance, a hydraulic control system, a control system utilizing the electric motor has more advantages because the speed of the electric motor can be more precisely controlled, and because use and maintenance of the electric motor is easier than a hydraulic control system. As a result, electric motors have been used extensively in various fields. For instance, in the case of a servo system, there have long been used direct current motors because of their excellent torque characteristics, but recently a higher degree of reliability is demanded, so that the direct current motors have been replaced with alternating current motors without a commutator.

The commutator used in the direct current motor converts a direct current into an alternating current, based on the mechanical principle. The converted alternating current is supplied to an armature, so that a rotating magnetic field is produced. A brushless motor is such that a commutator is replaced with a semiconductor element. Similarly, synchronous motors and induction motors produce the rotating magnetic field by supplying polyphase alternating current to its stator windings. The rotational speed of the rotating magnetic field varies depending upon the frequency of the exciting current applied across the exciting windings. In order to control the speed of the synchronous motor, a frequency converter having semiconductor elements or devices is widely used. In this case, it may be considered that a converter for converting the direct current into the alternating current corresponds to the semiconductor elements or devices of the brushless motor. Therefore, it may be considered that the brushless motor is similar to the synchronous motor from a viewpoint of structure.

The speed of the electric motor is controlled by controlling the rotational speed of the rotating magnetic field by varying the frequencies of the alternating current voltages induced across the armature windings of the direct current motor, across the stator windings of the synchronous motor, and across the rotor windings of the induction motors. However, the synchronous motor, the direct current motor, and the induction motor have a common defect that if a power supply voltage is maintained at a predetermined level, an abnormal overcurrent flows into the motors when started. This defect is due to an operation principle of these motors, so that it cannot be overcome or eliminated by improving the construction of the motors.

When, however, the value of the starting current is limited, the rotating force of torque is decreased, so that rotational speed becomes unstable. In the cases of servo systems, the excess starting torque is required very often. Thus, the characteristics of the conventional electric motors are not satisfactory in practice, because of the reasons described above.

The second aspect of the present invention (defined with respect to the effect in a basic synchronous motor) is characterised in that the magnitude of the rotating flux is oscillated and the interaction is induced by the oscillation. Thus, from this point of view, the invention provides a synchronous motor effect which also has attributes of an induction motor, in that the reaction in the second member is induced.

The third aspect of this invention (defined with respect to the effect in a basic induction motor) is characterised in that the magnitude of the rotating flux is oscillated so that the reaction is induced by the oscillation and the relative rotation of the two members is synchronised with the relative rotation of the flux and first member. Thus, from this point of view the invention provides an induction motor effect which also has attributes of a synchronous motor in that motor rotation is synchronised.

Thus, in accordance with either of these two aspects of the invention, the reaction is governed by the

2

oscillation rather than the rotation of the flux, but the speed is governed and synchronised with the rotation of the flux. With a high rate of oscillation the motor can be made small in size and light in weight.

The first aspect of this invention (relating to the electric motor apparatus) is characterised in that the power supply is operable to supply the currents in the form of amplitude modulated alternating currents with the carrier components of the plurality of currents being in phase with each other, and the modulation components of the plurality of currents being phased with respect to each other in accordance with the phasing of the windings and being of a frequency to determine the rotational speed of the motor.

Thus, the available torque from the motor is governed *inter alia* by the amplitude of the currents and the frequency of the carrier components, and yet the speed of the motor can be governed independently by the frequency of the modulation components. Furthermore, in the motor there is an elimination of the armature reaction which is encountered in a conventional direct current motor and synchronous motor.

Preferably, the windings and excitation currents are phased such that the magnitude of the alternating rotating magnetic field produced in the motor does not oscillate at the modulation frequency. Thus, in the case where variations in output torque due to the carrier frequency are damped or absorbed, the output torque of the motor can be constant for any angular position of the rotor.

Preferably, means are provided to adjust the modulation frequency. Thus, the speed of motor can be adjusted merely by adjusting the modulation frequency.

Preferably, means are provided to adjust the amplitudes of the excitation currents. Thus, the maximum available torque can be adjusted independently of motor speed.

Preferably, the winding of the rotor is short-circuited. The e.m.f. induced in the rotor winding thus produces a current which flows around the short-circuited winding, and there is no need for any external electrical connection to the rotor. Thus, the construction of the rotor can be considered to be somewhat akin to that of an induction motor. Furthermore, the higher the carrier frquency which is used, the fewer the number of rotor winding turns which are necessary for a given motor rating.

The power supply may be operable to supply two such excitation currents. Thus, when the excitation windings are effectively phased at right angles, the modulation components of the excitation current are likewise phased at right angles.

Conveniently, the power supply may include means to generate a carrier signal, means to generate a plurality of modulation signals, and means to modulate the carrier signal in accordance with the modulation signals to produce the excitation currents. In this case, preferably a single such carrier signal generating means serves to generate the carrier signal for all the excitation currents, and thus the proper phasing of the carrier components can be simply assured.

The power supply may include a transformer to receive the carrier signal from the carrier signal generating means, the secondary winding of the transformer being centre-tapped. Furthermore, means may be provided to invert the carrier component of each excitation current each time the modulation component of that current passes through zero. In this case, each modulating means is preferably operable to derive the carrier signal alternately from one and the other halves of the centre-tapped winding, the alternations being alternated each time the modulation component passes through zero. A preferred circuit arrangement for each modulating means and respective inverting means comprises four transistors having their emitters connected together and providing with the centre-tap of the transformer an output to the respective stator winding, the collectors of respective pairs of the transistors, which transistors of each such pair are of opposite polarity, being connected to respective end taps of the transformer, and the pairs of transistors of opposite polarity which are not so paired as aforesaid being driven by base currents related to the modulation signal and the inverse of the modulation signal, respectively.

Preferably, the power supply includes feedback means to maintain a predetermined average output voltage across each winding despite changes in current therethrough. The feedback means may include a respective isolating transformer connected across each winding to provide a feedback signal. Preferably, the output from each isolating transformer is fed to a respective filter arranged to reject the carrier component from the feedback signal.

There follows a description of specific embodiments of the present invention, reference being made to the accompanying drawings, in which:

Fig. 1A and 1B are waveforms illustrating modulated polyphase exciting voltages required for producing an alternating rotating magnetic field;

Figs. 2A, 2B, 2C and 2D are waveforms illustrating a carrier component and a modulation wave component contained in a exciting voltages as shown in Fig. 1;

Fig. 3 is a schematic diagram showing exciting windings and a short-circuited winding mounted on a rotor of one embodiment of a modulation controlled motor in accordance with the present invention;

Fig. 4 is a vector diagram illustrating an alternating rotating magnetic field;

Fig. 5 is a sectional view of an embodiment of a modulation controlled motor in accordance with the present invention;

Fig. 6 is a winding diagram showing one embodiment of the exciting windings as shown in Fig. 5;

Fig. 7 is a winding diagram showing one embodiment of the short-circuited winding as shown in Fig. 5;

Fig. 8 is a circuit diagram showing one embodiment of a circuit for producing an exciting voltage applied to one of the exciting windings as shown in Fig. 5;

Fig. 9 is a circuit diagram showing one embodiment of a modulation of the circuit as shown in Fig. 8;

3

Fig. 10 is a side view showing one embodiment of a rotary disc and some pairs of light-emitting diode and phototransistor which constitute a modulation signal source used in Fig. 8 or 9;

Fig. 11 is a circuit diagram showing one embodiment of the interconnection among the phototransistors as shown in Fig. 10;

Fig. 12 is a waveform illustrating operations of the circuit as shown in Fig. 11;

Fig. 13 is a circuit diagram showing one embodiment of a circuit for detecting or measuring a synchronization error of a modulation controlled motor in accordance with the present invention;

Fig. 14 is a timing diagram illustrating operations of the circuit as shown in Fig. 13.

For the sake of the better understanding of the present invention, it is important to note the fact that a rotor of a modulation controlled motor in accordance with the present invention rotates in synchronism with an alternating rotating magnetic field. Therefore, a principle of the modulation controlled motor will be first described with reference to a conventional synchronous motor.

In a conventional synchronous motor having three or two phase exciting windings, it has been well known to those skilled in the art that a rotating field is produced. In case of using two phase exciting windings, voltages applied two exciting windings must be out of phase by substantially 90°.

Assume that two electronic switching elements are inserted into an alternating current power supply, which in turn is connected to the two exciting windings, and that these two electronic switching elements are synchronously turned on and off at high speeds. Then, the rotating magnetic field is interrupted, so that an alternating magnetic field is included in the rotating magnetic field. As a result, an alternating current voltage is induced in a direct current field winding of a synchronous motor, which is synchronously rotating, by the electromagnetic induction. The alternating current produced by the induced voltage and the alternating magnetic field are combined to produce an electromagnetic force. Same is true when, instead of the electronic switching elements, a modulated discontinuous exciting voltage is applied to the exciting windings.

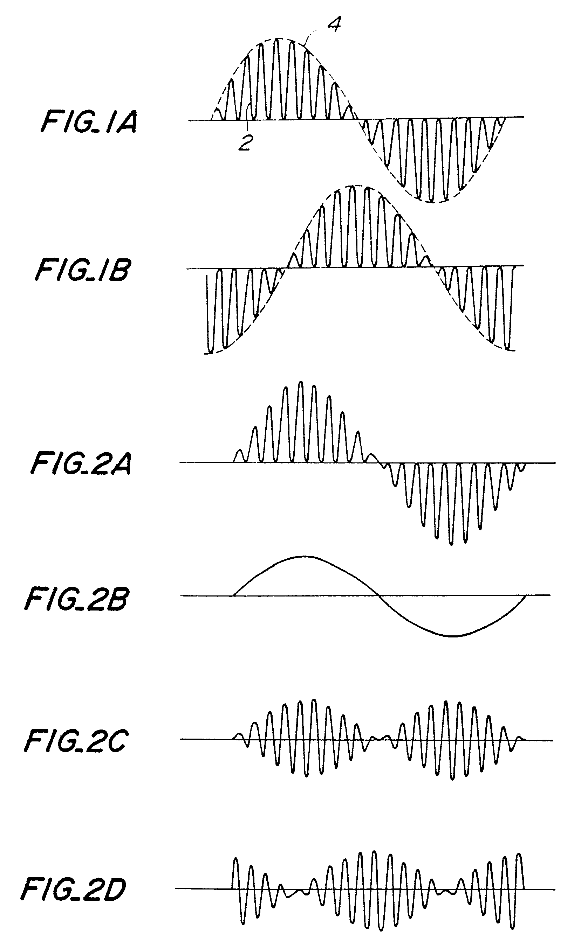

Waveforms as shown in Figs. 1A and 1B illustrate sinusoidal waveforms representative of the exciting voltages applied to two exciting windings, respectively. It is noted that the peak point of the carrier 2 coincides with the instantaneous value of a modulated wave as indicated by the broken line 4. The voltage as shown in Fig. 1A is applied to one of the two exciting windings, while the voltage as shown in Fig. 1B, to the other exciting winding.

A waveform as shown in Fig. 2A is equivalent to that as shown in Fig. 1A. When a modulation wave component as shown in Fig. 2B is extracted from the modulated waveform as shown in Fig. 2A, the carrier component as shown in Fig. 2C is obtained. It may be considered that the carrier component as shown in Fig. 2C is also amplitude modulated by a modulation wave whose phase and frequency are same as those of the modulation waveform component as shown in Fig. 2B. In general, it does not necessarily follow that the modulation waveform component (Fig. 2B) and the carrier component (Fig. 2C) have the same amplitude. Therefore, the waveform as shown in Fig. 2A is produced under special conditions.

Assume that the voltage as shown in Fig. 2C be applied to one of two exciting windings, while the voltage as shown in Fig. 2D, to the other exciting winding. Then, the following conclusion may be obtained from the comparison of the waveform as shown in Fig. 2C with the waveform as shown in Fig. 2D. The carriers of these voltage waveforms are the same in frequency, but the phase difference between the carriers is 0° or 180°. There exists the phase difference of 90° between the amplitude variations as shown in Figs. 2C and 2D.

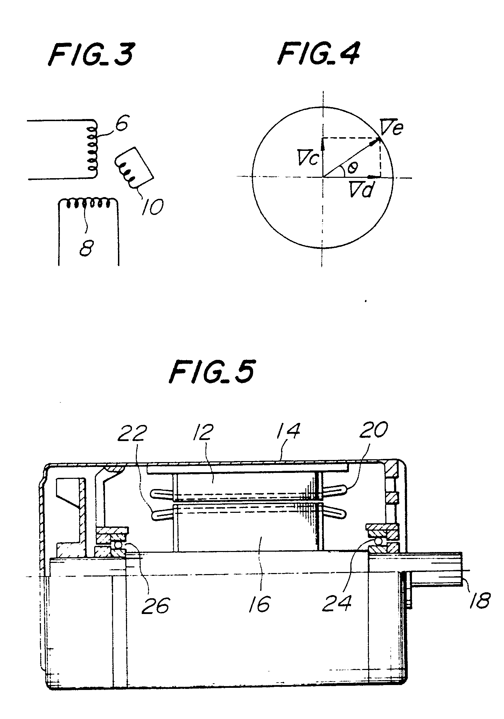

Fig. 3 shows a fundamental arrangement of windings of a preferred embodiment of the present invention. Two axes of windings 6 and 8 are perpendicular to each other, and these two windings fulfil their functions as exciting windings on the stator. A winding 10 on the rotor has an independent closed circuit. Assume that the closed circuit 10 is opened, and that a carrier voltage of a predetermined amplitude is applied across the rotor winding 10 when the rotor is rotated at a predetermined rotational speed. Then, an alternating magnetic field produced by the carrier voltage rotates mechanically, so that the number of interlinking fluxes of the stator winding varies. As a result, the voltage as shown in Figs. 2C and 2D, respectively, are induced in the stator windings 6 and 8. On the other hand, assume that the voltages as shown in Figs. 2C and 2D are applied to the stator windings 6 and 8. Then, an alternating current voltage of a predetermined amplitude is induced across the rotating winding 10. Thus, the latter assumption is similar to that former assumption, but it should be noted that the alternating magnetic field is produced by the stator winding 6 and 8. That is, a combined alternating magnetic field produced by the stator windings 6 and 8 has a predetermined effective value, and is rotated without a mechanical means, so that the alternating rotating magnetic field is produced.

Therefore, if the rotor winding 10 is short-circuited, the rotating force (torque) can be obtained by utilizing the electromagnetic force produced by the short-circuited current flowing through the rotor winding 10 and the combined alternating magnetic field. Thus, the modulation controlled motor can be rotated by utilizing the alternating rotating magnetic field as described above. In other words, the modulation controlled motor is different in construction from the conventional synchronous motor, in that the exciting winding 10 of the rotor is short-circuited. And the rotating force (torque) is produced by the reaction between the current flowing through the short-circuited winding and the alternating rotating magnetic field.

When the exciting voltages as shown in Figs. 1A and 1B are applied across the exciting windings 6 and

**0 110 561**

8, respectively, another rotating magnetic field due to the waveform as shown in Fig. 2B also coexists with the alternating rotating magnetic field. However, these two magnetic fields rotate in synchronism with each other, so that the rotating forces (torques) are completely synchronized with each other. As a result, as is the case of a hysteresis motor, a superposed rotating force (torque) has a very small value. The coexistence of such superposed rotating force will not adversely effect, in any way, the rotation of the modulation controlled motor in accordance with the present invention. That is, the exciting voltages as shown in Figs. 1A and 1B can be applied to the modulation controlled motor.

Next, a special case in which the exciting voltage is not modulated will be described. In this case, the peak value of the carrier is maintained at a predetermined level, and the exciting voltages applied across the two stationary exciting windings are the same in phase and frequency. As a consequence, the magnetic fields produced by the exciting windings, the axes of which are perpendicular spatially with respect to each other, become perpendicular with respect to each other. The direction of the magnetic field obtained by vectorially combining these mutually perpendicular magnetic fields varies depending upon the relative values of the exciting voltages. The voltage induced across the rotor winding which is held stationary varies depending upon the angle between the winding axis of the rotor and the magnetic field. The induced voltage becomes maximum, when the angle is zero; that is, when the direction of the axis of the rotor winding coincides with the direction of the magnetic field. When the rotor winding is short-circuited, the short-circuited current flows, so that the electromagnetic force produced by the short-circuited current produces a strong rotating force (torque) which can shift the short-circuited winding. From a standpoint of construction, the electromagnetic force corresponds to an alternating current electromagnetic force which is rotatable.

In this case, the rotating force acts in such a direction that the induced voltage is decreased. The theoretically stable position at which the rotor, which acts as an electromagnet, is held stationary is the position at which the voltage induced across the short-circuited winding becomes zero.

When the modulated voltages as shown in Figs. 2C and 2D are applied across the two exciting windings, the above-described combined magnetic field starts to rotate. As a consequence, the stable position of the short-circuited winding is displaced in response to the rotation of the combined magnetic field, the rotating force (torque) produced by the electromagnetic force is transformed into the strong and synchronized rotating force (torque). That is the reason why the rotor winding so as shown in Fig. 3 is short-circuited, and how the present modulation controlled motor is different in construction from the conventional synchronous motor.

The underlying principle why the modulation controlled motor makes synchronous rotation has been described. That is, the modulation controlled motor has the synchronous rotation characteristics similar to those of the conventional synchronous motor. The alternating magnetic field produced by each of the exciting windings due to the above-described modulation varies its magnitude from time to time, but the combined alternating magnetic field obtained by vectorially combining the alternating magnetic fields maintains a predetermined magnitude. In other words, the term "modulation" is used to refer that the components which compose the combined alternating magnetic field are produced by two exciting windings. As far as the synchronous rotation is ensured, a relationship between the combined magnetic field and the short-circuited winding is similar to a relationship between an internal magnetic field and a secondary winding of a transformer. The magnitude of the short-circuited current is dependent upon the angle between the direction of the combined alternating magnetic field and the axis of the short-circuited winding, when the rotor is synchronously rotating.

A mechanical load which acts on the shaft of the rotor becomes the force which resists against the synchronously rotating force, and has a function of displacing or shifting a relative position of the short-circuited winding from its stabilized position. When the shift angle is increased, both the induced voltage and the short-circuited current are also increased, whereby the rotating force (torque) is increased.

Under the conditions that the synchronous rotation is maintained, the short-circuited current makes a magnetic circuit produce a magnetomotive force. The magnetomotive force is cancelled by a load current flowing through the exciting windings due to the electromagnetic coupling as in the case of a transformer. Therefore, the modulation controlled motor has no armature reaction, so that no reactance which adversely affects the short-circuited current will occur.

The shift angle under loading is similar to that of a conventional synchronous motor. In general, the shift angle is small, but the higher the load is, the greater the shift angle becomes. In the case of the synchronous motors, the direct current magnetic field is not increased, when the load is increased. Sometimes, rather demagnetization occurs due to the armature reaction. On the other hand, in the modulation controlled motor, the heavier the load is, the higher the short-circuited current becomes, so that the "out-of-synchronization" can be avoided. The combined load current flowing into the modulation controlled motor is vectorially divided or distributed into two currents flowing into two stator windings, respectively, and in response to the variation in value of the exciting voltage due to modulation, the current division ratio varies. As a consequence, the modulation of the carrier has the double function of (1) determining the division ratio of the load current, and (2) rotating the combined magnetic field. It should be noted, however, that the above-described two functions will not interfere each other. In other words, even though the load current varies, the magnitude of the rotating magnetic field as well as the rotational speed are not affected at all.

5

**0 110 561**

In the case of the synchronous motor, it may be considered that the common exciting voltages having the same frequency serve to produce a magnetic field and a rotation of the magnetic field. As a result, when the rotational speed is decreased, the frequency is also decreased, so that magnetizing current required for producing the magnetic field is increased. On the other hand, in the modulation controlled motor, the carrier frequency is maintained at a predetermined value. As a consequence, even when the modulation frequency which determines the rotational speed is varied, the magnetic field as well as the magnetizing current are not adversely affected at all.

Thus, in the present motor, the production of the magnetic field and the rotation of the magnetic field are effected independently of each other by use of the carrier and the modulation wave which have different frequencies. That is, the combined magnetic field is not produced by the modulation wave component, but by the carrier component. Therefore, it follows that the rotational speed of the modulation controlled motor can be controlled by varying only the frequency of the modulation wave, while the frequency of the carrier is maintained at a predetermined value.

In other words, the above-described alternating rotating magnetic field is selectively used to attain not only an object of producing the rotating force (torque), but also an object of controlling the rotational speed. However, it should be noted that these objects can be attained only when the synchronous rotation is maintained.

The relationship between the short-circuited winding which makes synchronous rotation and the combined magnetic field is similar to the relationship between the secondary winding and the rotating magnetic field of the induction motor. Thus, it may be said that the modulation controlled motor corresponds to a combination of the synchronous motor and the induction motor. Assume that the direct current field winding included in the synchronous motor be a direct current electromagnet, short-circuited winding of the modulation controlled motor be an alternating current electromagnet.

Therefore, in the case of a synchronous motor, an attraction force of the direct current electromagnet is utilized, but in the case of the modulation controlled motor, the attraction force of an alternating current electromagnet is utilized. However, essentially the present motor also utilizes the attraction force of electromagnet.

As to the operation characteristics, there exists no armature reaction in the modulation controlled motor, so that the motor does not belong to the class of conventional synchronous motors. Furthermore, since the modulation controlled motor makes synchronous rotation, it does not belong to the class of conventional induction motor. Both the direct current motor and the synchronous motor have the armature reaction, and are based upon the same or similar theory for producing the torque, but to those skilled in the art, they are different types of motors. In view of the above, it would be difficult to define the modulation controlled motor as a conventional alternating current motor. It should be rather defined as a further class of alternating current motor.

As described above, the modulation controlled motor in accordance with the present invention needs the alternating rotating magnetic field. When the voltages Vc and Vd as shown in Fig. 4 are applied across the exciting windings 6 and 8 as shown in Fig. 3, let $\phi o$ denote the instantaneous angle of the carrier frequency, and let $\theta$ denote the instantaneous angle of the frequency of the modulation wave. Then, the voltages $V_c$ and Vd are given by the following relations:

$$Vc=\sqrt{2}\ E\ \sin\ \theta o \cdot \sin\ \theta = Ve\ \sin\ \theta \tag{1}$$

and

$$Vd=\sqrt{2}\ E\ \sin\ \theta o \cdot \cos\ \theta = Ve\ \cos\ \theta \tag{2}$$

where

$$Ve=\sqrt{2}\ E\ \sin\ \theta o$$

The above Equations (1) and (2) are vectorially shown in Fig. 4. If the effective value E is maintained constant, even when the voltages Vc and Vd as shown in Figs. 2C and 2D vary in magnitude, the magnitude of the Ve remains unchanged. Even when the voltages Vc, Vd and Ve have same phase with respect to $\theta o$, directions of the vectors of these voltages (therefore, the waveforms) are reversed depending upon the variation of $\theta$, so that the voltage Ve is rotated. In other words, whenever the modulation wave as shown in Fig. 2B crosses the zero level, the phase of the carrier is reversed by 180°.

Meanwhile,

$$\cos\ \theta = 1/2\ (\varepsilon^{j\theta} + \varepsilon^{-j\theta})$$

Since the two exciting windings are mutually perpendicular, the combined voltage is obtained from Equations (1) and (2) as follows:

$$Ve/2[(\varepsilon^{j\theta} + \varepsilon^{-j\theta}) + \varepsilon^{j(\pi/2)} \cdot \{\varepsilon^{j(\theta-\pi/2)} + \varepsilon^{-j(\theta-\pi/2)}\}] = Ve\ \varepsilon^{j\theta} \tag{3}$$

where $\varepsilon^{j\theta}$ is the vector whose magnitude is unity, and which rotates in the counterclockwise direction; and j is the square root of $-1$.

Since the magnitude of the voltage is in proportion to the magnitude of the magnetic field, Equation (3) represents the alternating rotating magnetic field.

6

# 0 110 561

As described above, the rotating force (torque) of the modulation controlled motor is based on the electromagnetic force which functions as an alternating current electromagnet. It is well known that when a current $i_2$ flows through the number of $2N_2$ conductors, each of which has a length of I and makes an angle $\beta$ with a uniform magnetic field H having a uniform magnetic flux density b, the electromagnetic force f produced in these conductors is in proportion to $i_2$ b, I, $2N_2$ and sin $\beta$. When this relation is applied to the present invention, the magnetic flux density b is determined by Ve shown in Equations (1) and (2). Therefore, the magnetic flux density b is denoted by B cos $\theta o$; furthermore, let $N_2$ denote turns of the short-circuited winding; let D denote a width of the winding; let $\alpha$ denote a power factor angle; and let the current $i_2$ flowing through the short-circuited winding when an impedance of the exciting windings is small

$$i_2 = \sqrt{2}\, I_2 \cos \beta \cdot \sin (\theta o - \alpha),$$

where $I_2$ is the effective value of $i_2$.

Then the rotating force (torque) $\tau$ is given by

$$\tau = 2f\,(D/2)$$
$$= k_1 N_2 DIB \cos \theta o\, \{\sqrt{2}\, I_2 \cos \beta \cdot \sin (\theta o - \alpha)\} \sin \beta$$
$$= k_2 N_2 B I_2 \sin 2\beta\, \{\sin (2\theta o - \alpha) - \sin \alpha\} \tag{4}$$

where $k_1$ and $k_2$ are constants.

From Equation (4), it is apparent that the rotating force (torque) $\tau$ consists of the rotating force which vibrates at the frequency $2\theta o$ and the rotating force which rotates in a predetermined direction. Since the frequency $\theta o$ is high, and furthermore the rotor has an inertia, the vibrating torque is absorbed. As a result, only the average torque T which rotates in a predetermined direction acts. That is, the average rotating force T is given by

$$T = -k_2\, N_2\, B\, I_2 \sin 2\beta \cdot \sin \alpha \tag{5}$$

Equation (5) has the maximum value, when $\alpha = \pi/2$; that is, when sin $\alpha = 1$. In this case, the current $i_2$ and the magnetic flux density b become in-phase. This is similar to the fact that in the case of a single-phase alternating current motor, the power consumption becomes maximum when the voltage and the current are in-phase condition with respect to each other. And, $\beta$ represents the shift angle of the short-circuited winding. This shift angle $\beta$ results from the variations in mechanical load coupled to the shaft of the rotor. The term "shift angle" corresponds to a load angle of a synchronous motor; that is, the difference in angle between the rotating magnetic field and the direct current magnetic field, and being depend upon the magnitude of a mechanical load.

Regarding a conventional three phase squirrel-cage induction motor, assume that each of the exciting windings and the short-circuited winding of the rotor are divided into three, each of the divided windings is wound around a core, and the cores of the rotor are connected by means of a common shaft. If such a motor as described above may be considered as one of an induction motor, this induction motor corresponds to three rotating alternating current electromagnets which are connected directly. Therefore, an instantaneous value of each exciting voltage varies from time to time, so that the electromagnetic force acting on each core also varies, and the electromagnetic force is sequentially switched, whereby the combined starting rotating force (torque) can be obtained. Thus, Equation (5) shows that "in the case of the induction motor, the starting rotating force (torque) cannot be obtained without a reactive power".

In the case of the modulation controlled motor, in which the synchronous rotation is produced by the starting rotating force (torque), it is proper that the effect of the power factor angle $\alpha$ is similar to that of the induction motor. Therefore, it is recognized that the modulation controlled motor is similar to a combination of a synchronous motor and an induction motor, from a construction standpoint, as described above. However, in order that the rotation of the rotor may continuously produce a mechanical output, an effective power must be supplied from an exciting power source. The effective power is transformed into the mechanical output. This transformation is done by the magnetically stored energy obtained by integrating the product of the number of magnetic flux linkage and the current with respect to time. That is, it has been well known that the conversion of the energy is effected by the mutual interaction between the magnetic field and the motion, when the flux is alternated.

In practice, a hysteresis loss and a loss due to resistance must be taken into consideration, so that it is impossible that the power factor of the power supply becomes zero. The phenomenon that the effective power is converted into the mechanical power is substantially similar to that of the conventional alternating current motors.

When the angle $\beta$ as shown in Equations (4) and (5) does not vary, the short-circuited current is independent of the rotational speed. As a result, the rotational speed varies in response to the modulation frequency, while maintaining the synchronization. Therefore, while the exciting voltage is maintained at a predetermined level, the motor can be stopped or intermittently driven. In this case, abnormal magnetizing current does not flow. Such rotation characteristics as described above are well adapted for use in a servo system, in which severe acceleration and deceleration are effected and the motor is frequently started and stopped. In a servo system, an excessive rotating force (torque) is frequently needed at a starting point, so

7

**0 110 561**

that the exciting voltage must be temporarily increased in order to increase the flux density as well as the short-circuited current. And the speed response is determined by the rotating force (torque) and an inertia, so that in order to decrease the inertia, the rotor must be made compact in size and light in weight. If only the carrier frequency is increased without adversely affecting the magnitude of the combined alternating magnetic field, the number of turns of each winding may be decreased without increasing the rotation speed, so that the motor can be made more compact in size and more light in weight.

It has been well known that even in case of a conventional alternating current motor, it can be compact in size and light in weight by increasing the frequency of the exciting voltage, but the average rotational speed is increased in proportion to the frequency, so that the speed response is adversely affected by the increase in a rotating inertia energy. Furthermore, the load on a reduction gear is increased. As a consequence, such scheme as described above has not been employed in practice. In the case of the modulation controlled motor, it is necessary for increasing the rotating force (torque) that the resistance of the short-circuited winding must be decreased, and that the electromagnetic coupling between the short-circuited winding and the exciting windings must be as close as possible. For instance, in order to provide a short-circuited winding, a silver plate with a relatively low specific resistance is attached to, or printed on a surface of the rotor. Then, the resistance of the short-circuited winding can be decreased. At the same time, the short-circuited winding can be disposed as closely to the exciting windings as possible, so that the electromagnetic coupling between them can be increased. In this case, the number of turns of each winding is limited, so that it is possible to compensate the limitation caused by the number of turns by increasing the carrier frequency.

When the exciting voltages as shown in Figs. 1A and 1B are applied across the stator windings 6 and 8 as shown in Fig. 3, there exists a normal rotating magnetic field, in addition to the alternating rotating magnetic field. Therefore, when a rectifier is inserted into the short-circuited circuit, a direct current magnetic field produced by the rotor 10 makes another synchronous rotating force (torque) superimpose on the rotor 10, which superimposed torque acts as a synchronous motor. If the connection of the rectifier is reversed, the direct current magnetic field of the rotor is cancelled, so that a magnetic polarizing effect can be decreased, and consequently an alternating current magnetic coupling between the windings can be enhanced. When the carrier frequency is especially high, it is possible to improve a leakage reactance and the rotating force (torque) characteristics by utilizing resonance of a capacitor inserted into the short-circuited winding.

From a construction standpoint, the modulation controlled motor does not need a direct current field winding or permanent magnet. Furthermore, it does not need a commutator and a slip ring. As a consequence, the modulation controlled motor is highly reliable and durable in operation, and can be inexpensive to manufacture. Moreover, it has a higher degree of efficiency and its capacity is not limited, so that the capacity and the carrier frequency may be selected from a wide range. For instance, in the case of industrial robot, it is required from a production standpoint that a starting rotating force (torque) can be increased; a manipulation speed can be increased; an energy consumption must be saved; gear mechanisms must be simplified; and a motor must be made compact in size and light in weight. As described in detail in the above, the modulation controlled motor satisfies such requirements as described above. That is, it is advantageous in its construction and operation characteristics. For instance, in order to avoid wear of gears under severe conditions, the average speed of the motor and the reduction ratio can be decreased by utilizing the high rotating force (torque), whereby the gears can operate with a higher degree of reliability for a long time period. When a high frequency power supply in aircraft, vehicles or the like can be used, the motor and the gears can be made compact in size and light in weight, even when a speed control is not intended.

In practice, the modulation controlled motor uses a distributed winding, so that two exciting windings are similar to those of a two-phase synchronous motor or an induction motor. On the other hand, one short-circuited winding forms an independent circuit, in which the axis of the winding is oriented in a predetermined direction.

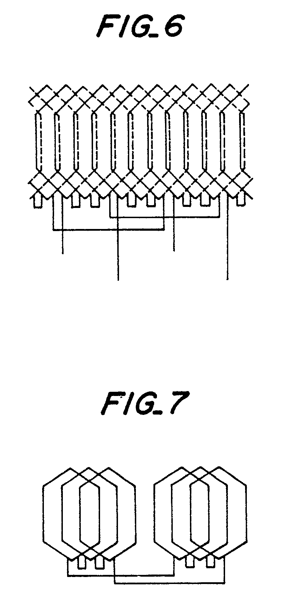

Fig. 5 shows a preferred embodiment of a modulation controlled motor in accordance with the present invention. A stator core 12 is securely fixed to an outer frame 14, and a rotor core 16 is carried by a shaft 18 which in turn is supported by bearings 24 and 26. The stator core 12 and the rotor core 16 are coaxially disposed with respect to each other, and spaced apart by a small air gap from each other. A plurality of winding conductors are filled in each of slots on the cores 12 and 16.

Fig. 6 shows a winding diagram of exciting windings. Twelve slots are shown in Fig. 6, and two conductors having same construction are disposed in each slot, whereby an exciting winding 20 as shown in Fig. 5 is provided.

Fig. 7 shows a winding diagram of a short-circuited winding on a rotor with twelve slots. The winding diagram corresponds to the winding 22 shown in Fig. 5.

According to the preferred embodiment of the present invention, each of the stator and rotor has twelve slots. The windings 20 and 22 as shown in Fig. 5 correspond to the windings 6, 8 and 10 as shown in Fig. 3. In practice, ends of the exciting winding 20 are extended through the outer frame 14 to its exterior. A fan (not shown) is mounted on one end of the shaft 18 in order to circulate air through the motor. The exciting winding 20 is constituted by two windings, but is is to be understood that, as in case of a conventional three-phase motor, it may contain three star-connection exciting windings or three

8

delta-connection exciting windings. It is to be further understood that even when the exciting winding 20 includes three star-connection or delta-connection exciting windings, the underlying principle of the present invention remains unchanged.

The modulation controlled motor needs a driving power supply for generating the alternating rotating magnetic field. The power supply comprises a negative feedback circuit, so that the exciting voltages as shown in Figs. 2C and 2D may be supplied in a stable manner regardless of variations in load current.

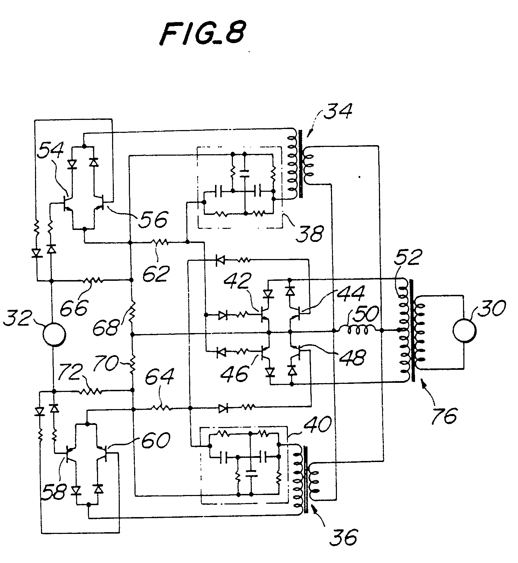

Fig. 8 shows a circuit connected to one of the exciting windings for producing the exciting voltage.

The operation of the circuit as shown in Fig. 8 is as follows: A carrier power supply 30 is connected to a single-phase transformer 76 whose secondary winding 52 has a center tap. Four transistors 42, 44, 46 and 48 constitute a bridge circuit. That is, the transistors 42 and 46 are connected in series, while the transistors 44 and 48 are connected in series, and the series-connected transistors 42 and 46 are connected in parallel with the series-connected transistors 44 and 48. The bridge circuit is connected to an exciting winding 50, which is a load and corresponds to the exciting winding 6 or 8 as shown in Fig. 3. When the parallel connected transistors 42 and 44, and the parallel-connected transistors 46 and 48 are alternately turned on, the current whose direction is alternately reversed flows into the exciting winding 50 from the transformer 76.

A modulation wave source 32 is connected in series to dividing resistors 66, 68, 70 and 72. The terminal voltages or voltages across the resistors 68 and 70 are applied to the bases of the transistors 42, 44, 46 and 48, and the voltages are amplified. As a result, the carrier is amplitude modulated in response to the frequency of the modulation wave, so that the exciting voltage as shown in Fig. 2C is applied to the exciting winding 50.

One end of the secondary winding of an insulating transformer 34, which is connected in parallel with the exciting winding 50, is connected to switching transistors 54 and 56, while the other end thereof is connected to a filter 38. In like manner, one end of the secondary winding of an insulating transformer 36, which is also connected in parallel with the exciting winding 50, is connected to switching transistors 58 and 60, while the other end is connected to a filter 40. According to this circuit arrangement, the exciting voltage as shown in Fig. 2C is transformed into the voltage wave form similar to the voltage as shown in Fig. 2A, then, the filters 38 and 40 are used to remove the carrier component, so that the modulation wave component as shown in Fig. 2B may be approximated to the waveform of the modulating voltage supplied from the modulation wave source 32. Thus, the voltage is derived as the voltages across resistors 62 and 68, respectively. A difference voltage across the resistors 62 and 68 are applied to the bases of the transistors 42 and 46, while the difference voltage across the resistors 64 and 70 are applied to the bases of the transistors 44 and 46. As a result, an instantaneous value of the carrier contained in the voltage across the exciting winding 50 can be automatically made in proportion to the instantaneous value of the voltage supplied from the modulation wave source 32.

Every time that the voltage supplied from the modulation wave source 32 is reversed in direction, the parallel-connected transistors 42, 44 and the parallel-connected transistors 46, 48 are periodically turned on and off. Therefore, there is no danger that the secondary winding of the transformer 76 is short-circuited. In synchronism with the change of conduction, a switching operation between the transistors 54, 56 and the transistors 58, 60 is effected. In order to switch these transistors, for instance, a current transformer (not shown) may be inserted between the parallel-connected transistors 42, 44 and the parallel-connected transistors 46, 48. In the circuit as shown in Fig. 8, however, the carrier frequency is relatively higher than the frequency of the modulation wave, so that the phase distortion of the modulation wave due to the filters 38 and 40 can be satisfactorily suppressed. Therefore, the voltage across the resistor 66 is applied to the bases of the transistors 54 and 56, while the voltage across the resistor 72 is applied to the bases of the transistors 58 and 60.

All of the diodes used in the circuit as shown in Fig. 8 serve to prevent the reverse voltages from being applied to the respective transistors. Each of the transistors may be replaced with a Darlington pair or a multi-stage amplifier.

The same electronic circuit as shown in Fig. 8 is also connected to the other exciting winding, but it should be noted that another circuit must include a modulation wave source, which is capable of producing a voltage which is out of phase by 90° with respect to the voltage supplied from the modulation wave source 32 as shown in Fig. 8.

The carriers which flow through the exciting windings 6 and 8 as shown in Fig. 3 must be in phase with respect to each other, so that the rotating magnetic field due to the carrier frequency will not be produced. To this end, it is preferable that the transformer 76 is used in common.

The electronic circuits as shown in Fig. 8 includes two pairs of symmetrical circuits (extending the bridge circuit). This arrangement is required so that the waveforms of the carrier currents flowing in the opposite directions through the exciting winding 50 may be symmetrical by alternately turning on and off the parallel-connected transistors 42, 44 and 46, 48. In other words, the parallel-connected transistors as shown in Fig. 8 is required to constitute a full-wave rectification circuit.

While the carrier currents flowing through the exciting windings 6 and 8 as shown in Fig. 3 have been described as being exactly in phase so far, but in practice, during every half period, a direction or polarity of the voltage induced across the secondary winding of the transformer 76 is reversed. Therefore, the phrase "in phase" as used in this specification is used to mean of the same phase and polarity or of the same

9

phase but opposite polarity. These are the conditions necessary for producing the alternating rotating magnetic field. That is, the alternating rotating magnetic field as shown in Fig. 4 is produced by inverting the exciting voltage at the end of each half period of the modulation wave. In practice, the parallel-connected transistors 42, 44 and 46, 48 are turned on and off alternately, so that the above-described object can be attained.

In general, an electronic circuit may be so suitably modified that the same object may still be attained. For instance, in case of the electronic circuit as shown in Fig. 8, if the series-connected transistors 44 and 48 are eliminated, a half of the above-described symmetrical circuits may be also eliminated. That is, the insulating transformer 36, the filter 40, the transistors 58 and 60, the resistors 64, 70 and 72 may be eliminated. In some case, the transformer 34 may be also eliminated. As a result, the electronic circuit may be more simplified in construction. In this case, the carrier current flowing through the exciting winding 50 becomes so-called a half-wave rectified wave. As a consequence, the alternating rotating magnetic field is produced by the alternating current component contained in the carrier current.

If the electronic circuit as shown in Fig. 8 is simplified as described above, an output power of the motor is decreased, but such simplication or modification is preferable when a motor with a relatively small capacity is required. Furthermore, in order to adjust the magnitude of the exciting voltage, instead of the fixed resistors 62 and 64, a potentiometer may be used, so that a part of the voltages across the potentiometer may be balanced with the voltages across the resistors 68 and 70, respectively.

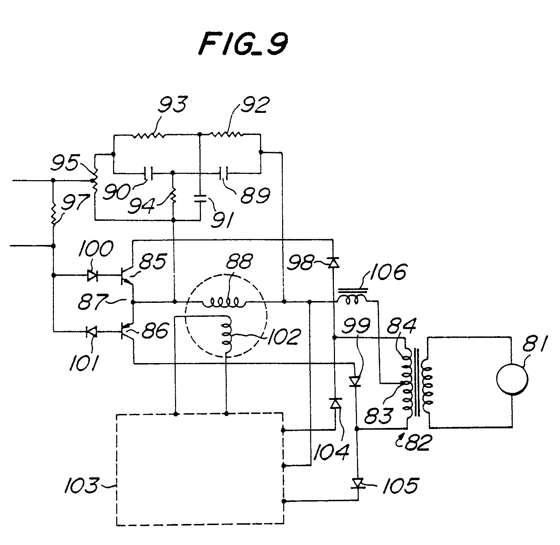

Fig. 9 shows a simplified exciting voltage generating circuit. Reference numeral 81 designates a carrier source; 82, a single-phase transformer; 83, a center tap of a secondary winding of the single phase transformer 82; 84, a secondary winding of the single phase transformer 82; 85 and 86, transistors; 87, a common joint; 88 and 102, exciting windings, 89 through 91, capacitors in a T-type filter; 92 through 94, resistors in the T-type filter; 95 a load resistor connected to the output of the T-type filter; and 98, 99, 100, 101, 104 and 105 diodes. The operation of the electronic circuit as shown in Fig. 9 is substantially similar to that of the electronic circuit as shown in Fig. 8, so that no further explanation shall be made in this specification.

A speed control of the modulation controlled motor is carried out only by adjusting the frequency of the modulation wave source, and is independent of its voltage and phase.

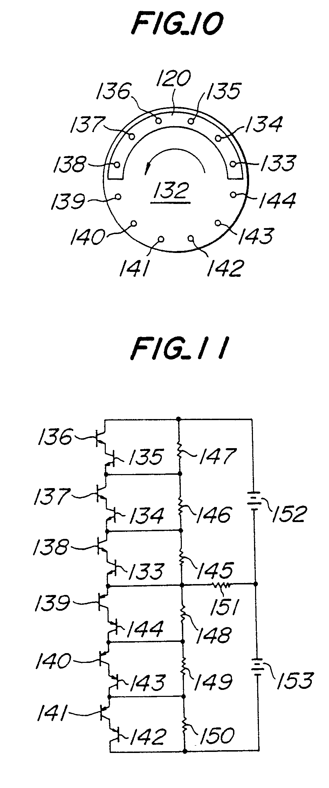

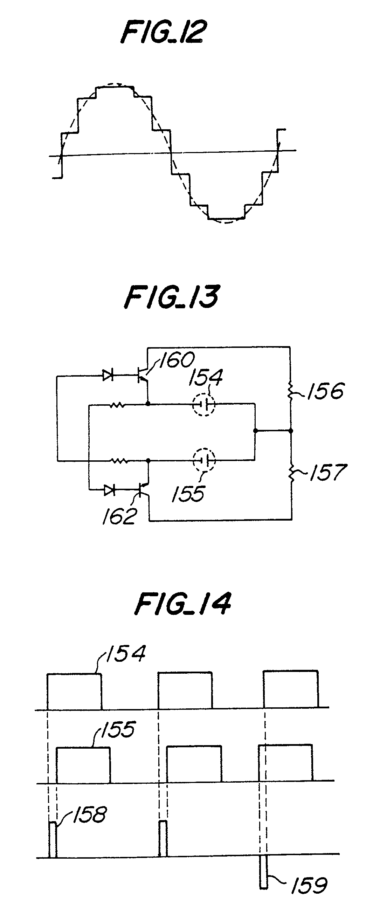

Figs. 10 and 11 show a device for generating a sinusoidal voltage, the device is incorporated into the modulation wave source 32 as shown in Fig. 8. A pair of parallel supporting plates (not shown) are disposed and spaced apart from each other by a predetermined distance, and a rotary disc 132 (See Fig. 10) is interposed between them in parallel therewith. Twelve light-emitting diodes (not shown) are mounted on one of the supporting plates in coaxial relationship with the rotary disc 132, and along the periphery thereof and equiangularly spaced apart from each other. In like manner, twelve phototransistors 133 through 144 are mounted on the other supporting plate in coaxial relationship with the rotary disc 132, and along the periphery thereof and equiangularly spaced apart from each other.

Twelve light-emitting diodes and twelve phototransistors 133 through 144 are disposed in optically opposed relationship with each other, in a manner that the light emitted from each of the light-emitting diodes is received by the corresponding phototransistor. The rotary disc 132 is interposed between them, in order to prevent the light emitted from the light-emitting diode from being intercepted by the corresponding phototransistor. But, the rotary disc 132 is formed with a semicircular slot 120, so that the light-emitting diode and phototransistor pairs are normally optically coupled to each other. That is, six phototransistors are normally turned on.

As shown in Fig. 11, a pair of phototransistors (for instance, 134 and 137) which are symmetrical with respect to the diameter of the rotary disc 132 are connected in series. Therefore, the phototransistors 136 and 135 are connected in series; the phototransistors 137 and 134 are connected in series; the phototransistors 138 and 133 are connected in series; the phototransistors 139 and 144 are connected in series; the phototransistors 140 and 143 are connected in series; and the phototransistors 141 and 142 are connected in series.

A resistor 147 is connected in parallel with the series-connected phototransistors 136 and 135; a resistor 146 is connected in parallel with the series-connected phototransistors 137 and 134; a resistor 145 is connected in parallel with the series-connected phototransistors 138 and 133; a resistor 148 is connected in parallel with the series-connected phototransistors 139 and 144; a resistor 149 is connected in parallel with the series-connected phototransistors 140 and 143; and a resistor 150 is connected in parallel with the series-connected phototransistors 141 and 142. The common junction between the resistors 145 and 148 is connected, through a resistor 151, to the positive terminal of a dc power source 153 and the negative terminal of a dc power source 152. One end of the resistor 147 is connected to the positive terminal of the dc power source 152, while one end of the resistor 150 is connected to the negative terminal of the dc power source 153. The resistors 145 through 150 are connected in series. The electromotive forces of the dc power sources 152 and 153 are the same. But, these power sources are connected in series, so that each flows the opposite current through the resistor 151.

As shown in Fig. 11, it is readily seen that when a pair of series connected phototransistors are turned on, the corresponding parallel-connected resistor is short-circuited. Thus, the phototransistors 133 through 144 function as switching elements. That is, as shown in Fig. 10, the phototransistors 133, 134, 135, 136, 137 and 138 are optically coupled through the semicircular slot 120 of the rotary disc 132 with their

**0 110 561**

corresponding light-emitting diodes (not shown), so that they are turned on, and consequently the resistors 145, 146 and 147 are short-circuited. Therefore, as the rotary disc 132 are rotated in the counterclockwise direction as indicated by the arrow in Fig. 10, the phototransistors 133 through 144 are sequentially turned on.

For instance, assume that the rotary disc 132 is rotated from the position as shown in Fig. 10, in such a way that the phototransistors 139, 140 and 141 are optically coupled with their corresponding light-emitting diodes. Then, the phototransistors 144, 143 and 142 are not optically coupled with their corresponding light-emitting diodes. As a result, the resistors 148, 149 and 150 are not short-circuited. In this manner, the short-circuited resistors 145, 146 and 147 are sequentially opened but not short-circuited. As the phototransistors 142, 143 and 144 are optically coupled with their corresponding light-emitting diodes, the resistors 150, 149 and 148 are sequentially short-circuited. It should be noted, however, that all of the resistors 145, 146 and 147 or all of the resistors 148, 149 and 150 are not simultaneously short-circuited. As a result, when the resistors 145 through 150 have suitable values, respectively, the voltage across the resistor 151 indicated by the solid lines may be approximated to a sinusoidal waveform as indicated by the broken line as shown in Fig. 12. It should be noted that the more the number of phototransistors is increased, the more exactly the voltage across the resistor 151 is approximated to a sinusoidal waveform.

The frequency of the thus obtained sinusoidal waveform is in proportion to the rotational speed of the rotary disc 132. The reason why the phototransistors 133 through 144 are used, as the switching elements in this embodiment, is that adverse effects caused by the variations in light quantity and by the drift of amplification factor may be avoided. Therefore, the output from each phototransistor may be amplified by means of other transistors. Alternatively, the phototransistors may be replaced with other suitable semiconductor devices.

As described above, each of the resistors 145 through 150 is short-circuited, only when its corresponding series connected phototransistors are simultaneously turned on. Such arrangement as described above is employed, because of the following reasons.

Firstly, in case that light-emitting diodes and the phototransistors described above are incorporated in the supporting plate (not shown) in the form of hybrid structure to make the rotary disc 132 compact in size, the distance between the adjacent phototransistors becomes short and not uniform. Furthermore, the luminous flux varies. As a result, it becomes very difficult to synchronously turn on and off each of diametrically opposed phototransistor pairs 133 and 139; 134 and 140; 135 and 141; 136 and 142; 137 and 143; and 138 and 144. However, the phototransistors 133 through 144 are connected to each other as shown in Fig. 11. Therefore, even if the rotary disc 132 is rotated in the counterclockwise direction from the position as shown in Fig. 10 so that the phototransistor 139 is optically coupled with its corresponding light-emitting diode, the resistor 148 is not short-circuited. In this case, however, the optical coupling between the phototransistor 133 and its corresponding light-emitting diode is interrupted by the rotary disc 132, so that the phototransistor 133 is turned off. As a result, the resistor 145 is not short-circuited. That is, it is not needed that the phototransistor 139 is turned on in synchronism with turning off the phototransistor 133, but the voltage across the resistor 151 is varied only when the phototransistor 133 is turned off.

Secondly, the above-described arrangement is employed because whenever the rotary disc 132 makes rotation through 180°, two similar voltage variations occur across the resistor 151. As a result, the circuit can be made simplified in construction.

The frequency of the voltage across the resistor 151 can become zero. It is important for the reliable operation of the circuit as shown in Fig. 8 or 9 that, even when the frequency of the sinusoidal wave varies, a correct instantaneous value be always maintained. In view of the above, the arrangement as shown in Figs. 10 and 11 is very advantageous.

In order to produce two-phase balanced alternating voltages, two voltage generators having the same construction are needed. In order to produce two-phase balanced alternating voltages by means of the device as shown in Figs. 10 and 11, two rotary discs must be mounted on a common shaft, and the semicircular slot of one disc must be out of phase with respect to the semicircular slot of the other disc by 90°. With this arrangement, it becomes possible to detect the direction of rotation of each rotary disc, in response to the two-phase modulating voltages.

As described above, in the modulation controlled motor, the shift angle β varies depending upon a load acting on a rotor. A change of the shift angle β tends to cause a synchronizing error between the rotor and the common shaft connecting two rotary discs. In order to eliminate such an error a reference disc (not shown) which is similar in shape to the rotary disc 132 is directly mounted on the rotating shaft, and a light-emitting diode is disposed on one side of the reference disc, while a phototransistor is disposed on the other side of the reference disc in opposed relationship with the light-emitting diode. The reference disc and the combination of the phototransistor and light emitting diode are relatively rotated through a suitable angle, so that the difference in phase between a rectangular voltage derived from the phototransistor and the sinusoidal voltage across the resistor 151 is minimised.

Fig. 13 shows a circuit for detecting the above-described phase difference. Reference numeral 154 designates a rectangular voltage derived from the reference disc; and 155, a saturated output voltage (that is, a rectangular voltage) derived by amplifying a half wave of the sinusoidal voltage. The peak value of the voltage 155 is made into coincident with the peak value of the voltage 154.

Figure 14 shows a phase relationship between the rectangular voltages 154 and 155. When they are in

11

**0 110 561**

phase, both the transistors 160 and 162 are turned off, so that no difference voltage is produced. But, if the voltage 154 leads or lags relative to the voltage 155, voltages 158 and 159 are produced across resistors 156 and 157. The direction of the voltage 158 across the resistors 156 is opposite to the direction of the voltage 159 across the resistor 159. If the synchronising error is minimised by rotating the reference disc the pulse durations of the voltages 158 and 159 are decreased. Then, it is possible to eliminate completely the synchronizing error. However, the shift angle $\beta$ is in general very small, so that a required adjusting angle by which the phototransistor and light-emitting diode are rotated is also small. As a result, it is not required that an amplifier used in the negative feedback control circuit as shown in Fig. 8 has a high gain, so that the amplifier may be made simple in construction, and have a higher degree of stability.

On the other hand, when the synchronization is maintained automatically by directly coupling a synchronizing signal generator to a conventional variable speed motor, an amplifier becomes complicated in construction. Furthermore, it is not easy to maintain the stability of the negative feedback control circuit. Opposed to such arrangement, the modulation controlled motor is driven synchronously by the electronic circuit as shown in Fig. 8, so that it is easy to maintain the stability of the circuit. The provision of the above-described reference disc results in a simplification of the synchronizing signal generator. That is, it is possible to attain the complete synchronization by a relatively simple circuit.

The effects, features and advantages of the motor and power supply described above may be summarized as follows:

(1) In the case of a hysteresis motor, a rotor winding is not provided, but a rotor core is dc magnetized by a rotating magnetic field, so that the synchronous rotation can be obtained.

On the other hand, the alternating rotating magnetic field is produced only by the exciting windings, and the synchronous rotation is effected by the short-circuited current flowing through the short-circuited winding on the rotor. The magnetomotive force due to the short-circuited current is cancelled by the load current, so that the alternating magnetic field is not adversely affected. Even when the exciting voltage as shown in Fig. 1A is applied, the motor functions as a modulation controlled motor. In addition, it further functions as a hysteresis motor, so that the additional synchronous rotating force (synchronizing torque) can be added.

(2) The modulation controlled motor has no armature reaction. In addition, as far as the shift angle remains unchanged, the rotating force (torque) as well as the rotational speed are not affected at all. Moreover, even when the frequency of the modulation wave is varied, the combined alternating magnetic field is not adversely affected. That is, the modulation controlled motor has optimum characteristics for effecting the speed control.

(3) In the modulation controlled motor, even when the peak value of the exciting voltage is varied as the result of the modulation, the magnitude of the combined magnetic field remains unchanged, so that the rotating force (torque) as well as the rotational speed are not adversely affected. Moreover, in the case of starting or in the case of the rotation at low speeds, no excess abnormal overcurrent flows. Furthermore, the rotating force (torque) is very strong, so that the modulation controlled motor is adapted for intermittent driving; that is, for instantaneously starting or stopping the motor.

(4) In a case of a servo system, it is essential that the system has an excellent speed response, which is dependent upon the rotating force (torque) and the inertia. In order to decrease the inertia, the motor must be made compact in size and light in weight. However, the modulation controlled motor can be made compact in size and light in weight only by increasing the carrier frequency. In order to temporarily increase the starting torque, it suffices only to increase the exciting voltages, thereby increasing the flux density and the short-circuited current.

(5) The short-circuited winding mounted on the rotor composes an independent circuit, so that a commutator and a slip ring can be eliminated. As a result, the modulation controlled motor can be made simplified in construction, yet is highly reliable in operation. However, it should be noted that when the exciting voltage as shown in Fig. 1A is used, a rectifier is inserted into the short-circuited winding, so that the dc magnetization of the rotor can be used as the rotating force (torque) of a synchronous motor. In this case, if the rectifier is reversed in direction, the magnetical polarization effect can be decreased by the cancellation of the dc magnetization. As a result, the effect of increasing the alternating current magnetic coupling between the windings can be obtained.

(6) In order to increase the rotating force (torque), the leakage flux of the exciting winding must be decreased, so that the impedance of the short-circuited winding must be reduced. For instance, a silver plate with a low specific resistance may be attached or printed on the surface of the rotor. Then, the rotor winding can be disposed very close to the exciting windings, so that the leakage flux can be decreased. In this case, even though limited by the number of turns, the limitation on the number of turns can be compensated by increasing the carrier frequency.

(7) In the case of a conventional variable speed motor, in order to maintain a synchronous rotation, a synchronizing signal generator is directly coupled to the variable speed, and a servo amplifier is used. Then, the amplifier becomes very complex in construction, so that it is not easy to ensure the stability of the negative feedback control. On the other hand, the modulation controlled motor is controlled by the modulation signal, so that the stable control can be attained in a simple manner.

(8) The modulation controlled motor has synchronization characteristics similar to that of a pulse motor and excellent torque characteristics.

12

**Claims**

1. An electric motor apparatus comprising:
an electric motor having a stator (12) and a rotor (16) with a closed-circuited winding (10; 22; Fig. 7); and a power supply (Fig. 8; Fig. 9) for supplying alternating excitation currents to a plurality of windings (6, 8; 20; 50; 88, 102) of the stator which are phased with respect to each other; characterised in that; the power supply is operable to supply the currents in the form of amplitude-modulated alternating currents (Figs. 1A, 1B; Figs. 2C, 2D) with the carrier components of the plurality of currents being in phase with respect to each other, and the modulation components of the plurality of currents being phased with respect to each other in accordance with the phasing of the windings and being of a frequency to determine the rotational speed of the motor.

2. An apparatus as claimed in claim 1, characterised in that the windings and excitation currents are phased such that the magnitude of the alternating rotating magnetic field produced in the motor does not oscillate at the modulation frequency.

3. An apparatus as claimed in claim 1 or 2, characterised by means to adjust the modulation frequency.

4. An apparatus as claimed in any preceding claim, characterised by means to adjust the amplitudes of the excitation currents.

5. An apparatus as claimed in any preceding claim, characterised in that the winding (10; 22; Fig. 7) of the rotor (16) is short-circuited.

6. An apparatus as claimed in claim 5, characterised in that the rotor has a cylindrical magnetic core (16) forming a narrow and uniform air gap with said stator (12), the short-circuited winding being arranged in the surface portion of said magnetic core.

7. An apparatus as claimed in any preceding claim, characterised in that the power supply is operable to supply two such excitation currents.

8. An apparatus as claimed in any preceding claim characterised in that the power supply includes means (30; 81) to generate a carrier signal, means (32) to generate a plurality of modulation signals, and means (Fig. 8; Fig. 9) to modulate the carrier signal in accordance with the modulation signals to produce the excitation currents.

9. An apparatus as claimed in claim 8, characterised in that a single such carrier signal generating means (30; 81) serves to generate the carrier signal for all the excitation currents.

10. An apparatus as claimed in claim 9, characterised in that the power supply includes a transformer (76; 82) to receive the carrier signal from the carrier signal generating means, the secondary winding (52, 84) of the transformer being centre-tapped.

11. An apparatus as claimed in any of claims 8 to 10 characterised by means (42—48; 85, 86) to invert the carrier component of each excitation current each time the modulation component of that current passes through zero.

12. An apparatus as claimed in claims 10 and 11, wherein each modulating means is operable to derive the carrier signal alternately from one and the other halves of the centre-tapped winding (52; 84), the alternations being alternated each time the modulation component passes through zero.

13. An apparatus as claimed in claim 12, characterised in that each modulating means and respective inverting means comprises four transistors (42, 44, 46, 48) having their emitters connected together and providing with the centre-tap of the transformer an output to the respective stator winding (50), the collectors of respective pairs (42, 44; 46, 48) of the transistors which transistors of each such pair of opposite polarity, being connected to respective end taps of the transformer, and the pairs (42, 46; 44, 48) of transistors of opposite polarity which are not so paired as aforesaid being driven by base currents related to the modulation signal and the inverse of the modulation signal, respectively.

14. An apparatus as claimed in any preceding claim, characterised in that the power supply includes feedback means (34—40, 54—60; 89—95) to maintain a predetermined average output voltage across each winding despite changes in current therethrough.

15. An apparatus as claimed in claim 14, characterised in that the feedback means includes a respective isolating transformer (32, 36) connected across each winding to provide a feedback signal.

16. An apparatus as claimed in claim 15, characterised in that the output from each isolating transformer is fed to a respective filter (38, 40) arranged to reject the carrier component from the feedback signal.

17. A method of producing a motor effect, comprising:—
generating from a first (12) of two relatively rotatable members (12, 16) a magnetic flux which rotates relative to that member; and
interacting the flux with a winding of the second member (16) to cause relative rotation of the two members synchronised with the relative rotation of the flux and first member; characterised in that:—
the magnitude of the rotating flux is oscillated and the interaction is induced by the oscillation.

18. A method of producing a motor effect, comprising:—
generating from a first (12) of two relatively rotatable members (12, 16) a magnetic flux which rotates relative to that member; and
interacting the flux with a winding of the second member (16) to induce a reaction in the second member to cause relative rotation of the two members; characterised in that:—

13

# 0 110 561

the magnitude of the rotating flux is oscillated so that the reaction is induced by the oscillation and the relative rotation of the two members is synchronized with the relative rotation of the flux and first member.

**Patentansprüche**

1. Elektromotor-Vorrichtung, aufweisend:
einen Elektromotor mit einem Stator (12) und einem Rotor (16) mit einer Wicklung (10; 22; Figur 7) mit geschlossenem Stromkreis; und
eine Leistungsversorgung (Figur 8; Figur 9) zum Zuführen von Wechsel-Erregerströmen an eine Vielzahl von Wicklungen (6, 8; 20; 50; 88, 102) des Stators, die bezüglich der Phase zueinander abgestimmt sind; dadurch gekennzeichnet,
daß die Leistungsversorgung so zu betreiben ist, daß die Ströme in Form von amplitudenmodulierten Wechselströmen (Figuren 1A, 1B; Figuren 2C, 2D) zugeführt werden, wobei die Trägerkomponenten der Vielzahl von Strömen zueinander in Phase sind, und die Modulationskomponenten der Vielzahl von Strömen entsprechend der Phasenabstimmung der Wicklungen bezüglich der Phase zueinander abgestimmt sind und eine Frequenz haben, um die Drehgeschwindigkeit des Motors zu bestimmen.

2. Vorrichtung nach Anspruch 1, dadurch gekennzeichnet, daß die Wicklungen und Erregerströme bezüglich der Phase so abgestimmt sind, daß die Größe des im Motor erzeugten Wechsel-Drehmagnetfeldes nicht bei der Modulationsfrequenz oszilliert.

3. Vorrichtung nach Anspruch 1 oder 2, gekennzeichnet durch Einrichtungen zum Einstellen der Modulationsfrequenz.

4. Vorrichtung nach einem der vorhergehenden Ansprüche, gekennzeichnet durch Einrichtungen zum Einstellen der Amplituden der Erregerströme.

5. Vorrichtung nach einem der vorhergehenden Ansprüche, dadurch gekennzeichnet, daß die Wicklung (10; 22; Figur 7) des Rotors (16) kurzgeschlossen ist.

6. Vorrichtung nach Anspruch 5, dadurch gekennzeichnet, daß der Rotor einen zylindrischen Magnetkern (16) hat, der einen schmalen und gleichmäßigen Luftspalt mit dem Stator (12) bildet, wobei die kurzgeschlossene Wicklung im Oberflächenbereich des Magnetkerns angeordnet ist.

7. Vorrichtung nach einem der vorhergehenden Ansprüche, dadurch gekennzeichnet, daß die Leistungsversorgung so zu betrieben ist, daß sie zwei derartige Erregerströme zuführt.

8. Vorrichtung nach einem der vorhergehenden Ansprüche, dadurch gekennzeichnet, daß die Leistungsversorgung eine Einrichtung (30; 81) zur Erzeugung eines Trägersignals, eine Einrichtung (32) zur Erzeugung einer Vielzahl von Modulationssignalen sowie eine Einrichtung (Figur 8; Figur 9) enthält, um das Trägersignal entsprechend den Modulationssignalen zu modulieren, um die Erregerströme zu erzeugen.

9. Vorrichtung nach Anspruch 8, dadurch gekennzeichnet, daß eine einzige derartige Trägersignal-Erzeugungseinrichtung (30; 81) dazu dient, das Trägersignal für alle Erregerströme zu erzeugen.

10. Vorrichtung nach Anspruch 9, dadurch gekennzeichnet, daß die Leistungsversorgung einen Transformator (76; 82) enthält, um das Trägersignal von der Trägersignal-Erzeugungseinrichtung zu empfangen, wobei die Sekundärwicklung (52; 84) des Transformators einen Mittelabgriff aufweist.

11. Vorrichtung nach einem der Ansprüche 8 bis 10, gekennzeichnet durch Einrichtungengen (42 bis 48; 85, 86), um die Trägerkomponente von jedem Erregerstrom bei jedem Nulldurchgang der Modulationskomponente dieses Stroms zu invertieren.

12. Vorrichtung nach Anspruch 10 und 11, wobei jede modulierende Einrichtung so zu betreiben ist, daß das Trägersignal abwechselnd von der einen und der anderen Hälfte der Wicklung (52; 84) mit Mittelabgriff abgenommen wird, wobei die Wechselfolge bei jedem Nulldurchgang der Modulationskomponente gewechselt wird.

13. Vorrichtung nach Anspruch 12, dadurch gekennzeichnet, daß jede modulierende Einrichtung und entsprechende invertierende Einrichtung vier Transistoren (42, 44, 46, 48) aufweist, deren Emitter miteinander verbunden sind, und die mit dem Mittelabgriff des Transformators einen Ausgang zu der entsprechenden Statorwicklung (50) schaffen, wobei die Kollektoren von jeweiligen Paaren (42, 44; 46, 48) der Transistoren mit entsprechenden Endabgriffen des Transformators verbunden sind, wobei die Transistoren von jedem derartigen Paar von entgegengesetzter Polarität sind, und wobei die Paare (42, 46; 44, 48) von Transistoren entgegengesetzter Polarität, die nicht wie oben beschrieben gepaart sind, von Basisströmen angesteuert werden, die mit dem Modulationssignal bzw. dem Inversen des Modulationssignals in Beziehung stehen.

14. Vorrichtung nach einem der vorhergehenden Ansprüche, dadurch gekennzeichnet, daß die Leistungsversorgung eine Rückkoppeleinrichtung (34 bis 40; 54 bis 60; 89 bis 95) enthält, um eine vorgegebene Durchschnitts-Ausgangsspannung über jeder Wicklung trotz Veränderungen im dadurch fließenden Strom beizubehalten.

15. Vorrichtung nach Anspruch 14, dadurch gekennzeichnet, daß die Rükkoppeleinrichtung einen entsprechenden Trenntransformator (34, 36) enthält, der über jede Wicklung geschaltet ist, um ein Rückkoppelsignal zu liefern.

16. Vorrichtung nach Anspruch 15, dadurch gekennzeichnet, daß die Ausgabe von jedem Trenntransformator einen entsprechenden Filter (38, 40) zugeführt wird, das angeordnet ist, um die Trägerkomponente von dem Rückkoppelsignal zurückzuweisen.

14

**0 110 561**

17. Verfahren zum Erzeugen einer Motorwirkung, aufweisend:

Erzeugen eines magnetischen Flusses von einem ersten (12) von zwei relativ drehbaren Elementen (12,16), der sich relativ zu diesem Element dreht; und

Wechselwirken des Flusses mit einer Wicklung des zweiten Elements (16), um einen Relativdrehung der zwei Elemente hervorzurufen, die mit der Relativdrehung des Flusses und des ersten Elements synchronisiert ist; dadurch gekennzeichnet,

daß die Größe des sich drehenden Flusses in Schwingung versetzt wird, und die Wechselwirkung durch die Schwingung induziert wird.

18. Verfahren zum Erzeugen einer Motorwirkung, aufweisend:

Erzeugen eines magnetischen Flusses von einem ersten (12) von zwei relativ drehbaren Elementen (12, 16), der sich relativ zu diesem Element dreht; und

Wechselwirken des Flusses mit einer Wicklung des zweiten Elements (16), um eine Reaktion in dem zweiten Element zu induzieren, um eine Relativdrehung der zwei Elemente hervorzurufen; dadurch gekennzeichnet,

daß die Größe des sich drehenden Flusses in Schwingung versetzt wird, so daß die Reaktion durch die Schwingung induziert wird, und die Relativdrehung der zwei Elemente mit der Relativdrehung des Flusses und des ersten Elements synchronisiert wird.

**Revendications**

1. Appareil à moteur électrique comprenant un moteur électrique ayant un stator (12) et un rotor (16) avec un enroulement à circuit fermé (10; 22; figure 7), et un circuit d'alimentation (figure 8; figure 9) pour fournir des courants d'excitation alternatifs à plusieurs enroulements (6, 8; 20; 50; 88, 102) du stator qui sont réglés en phase les uns par rapport aux autres, caractérisé en ce que le circuit d'alimentation fournit les courants sous forme de courants alternatifs modulés en amplitude (figures 1A, 1B; figure 2C, 2D), les composantes porteuses de ces courants étant en phase les unes par rapport aux autres, et les composantes de modulation de ces courants étant réglées en phase les unes par rapport aux autres en accord avec le réglage de phase des enroulements et ayant une fréquence déterminant la vitesse de rotation du moteur.

2. Appareil selon la revendication 1, caractérisé en ce que les enroulements et les courants d'excitation sont réglés en phase de telle sorte que l'amplitude du champ magnétique tournant alternatif produit dans le moteur n'oscille pas à la fréquence de modulation.

3. Appareil selon la revendication 1 ou 2, caractérisé par des moyens de réglage de la fréquence de modulation.

4. Appareil selon l'une des revendications précédentes, caractérisé par des moyens de réglage des amplitudes des courants d'excitation.

5. Appareil selon l'une des revendications précédentes, caractérisé en ce que l'enroulement (10; 22; figure 7) du rotor (16) est court-circuité.

6. Appareil selon la revendication 5, caractérisé en ce que le rotor comprend un noyau magnétique cylindrique (16) formant un entrefer étroit et uniforme avec le stator (12), l'enroulement court-cuicuité étant agencé sur la partie de surface du noyau magnétique.

7. Appareil selon l'une des revendications précédentes, caractérisé en ce que le circuit d'alimentation fournit deux courants d'excitation précités.

8. Appareil selon l'une des revendications précédentes, caractérisé en ce que le circuit d'alimentation comprend des moyens (30; 81) pour produire un signal porteur, des moyens (32) pour produire plusieurs signaux de modulation, et des moyens (figure 8; figure 9) pour moduler le signal porteur en fonction des signaux de moulation et produire les courants d'excitation.

9. Appareil selon la revendication 8, caractérisé en ce qu'un seul moyen (30, 81) précité de production de signal porteur sert à produire le signal porteur pour tous les courants d'excitation.

10. Appareil selon la revendication 9, caractérisé en ce que le circuit d'alimentation comprend un transformateur (76; 82) recevant le signal porteur des moyens précités de production, l'enroulement secondaire (52; 84) de ce tranformateur étant à point milieu.

11. Appareil selon l'une des revendications 8 à 10, caractérisé par des moyens (42—48; 85, 86) pour inverser la composante porteuse de chaque courant d'excitation chaque fois que la composante de modulation de ce courant passe par zéro.

12. Appareil selon l'ensemble des revendications 10 et 11, caractérisé en ce que chaque moyen de modulation obtient le signal porteur alternativement de l'une et l'autre moitié de l'enroulement (52; 84) à point milieu, ces alternances étant alternées chaques fois que la composante de modulation passe par zéro.

13. Appareil selon la revendication 12, caractérisé en ce que chaque moyen de modulation et chaque moyen respectif d'inversion comprend quatre transistors (42, 44, 46, 48) dont les émetteurs sont reliés ensemble et forment avec le point milieu du transformateur une sortie de l'enroulement respectif de stator (50), les collecteurs des paires respectives (42, 44; 46, 48) des transistors qui sont des polarité opposée dans chacune de ces paires, étant reliés aux bornes d'extrémité respectives du transformateur, et les paires (42, 46; 44, 48) de transistors de polarité opposée qui ne sont pas réunis en paires de la façon précitée, étant pilotées par des courants de base fonction du signal de modulation et de l'inverse du signal de modulation respectivement.

**0 110 561**

14. Appareil selon l'une des revendications précédentes, caractérisé en ce que le circuit d'alimentation comprend des moyens de contre réaction (34—40, 54—60; 89—95) pour maintenir une tension de sortie moyenne prédéterminée aux bornes de chaque enroulement en dépit des variations de courant à travers les enroulements.

15. Appareil selon la revendication 14, caractérisé en ce que les moyens de contre réaction comprennent un transformateur d'isolement respectif (34, 36) relié aux bornes de chaque enroulement pour fournir un signal de contre réaction.

16. Appareil selon la revendication 15, caractérisé en ce que la sortie de chaque transformateur d'isolement est appliquée à un filtre respectif (38, 40) destiné à rejeter la composante porteuse du signal de contre réaction.

17. Procédé de production d'un effet moteur, consistant à générer, à partir d'un premier (12) de deux éléments (12, 16) rotatifs l'un par rapport à l'autre, un flux magnétique qui tourne par rapport à cet élément, et à faire interagir le flux avec un enroulement du second élément (16) pour provoquer une rotation relative des deux éléments synchronisée avec la rotation relative du flux et du premier élément, caractérisé en ce que l'amplitude du flux tournant oscille et l'interaction est induite par l'oscillation.

18. Procédé de production d'un effet moteur, consistant à générer, à partir d'un premier (12) de deux éléments (12, 16) rotatifs l'un par rapport à l'autre, un flux magnétique qui tourne par rapport à cet élément, et à faire interagir le flux avec un enroulement du second élément (16) pour induire une réaction dans le second élément afin de provoquer une rotation relative des deux éléments, caractérisé en ce que l'amplitude du flux tournant oscille de telle sorte que la réaction est induite par l'oscillation et la rotation relative des deux éléments est synchronisée avec la rotation relative du flux et du premier élément.

*FIG.1A*

*FIG.1B*

*FIG.2A*

*FIG.2B*

*FIG.2C*

*FIG.2D*

## FIG_3

## FIG_4

## FIG_5

# FIG_6

# FIG_7

# FIG_8

# FIG_9

## FIG.10

## FIG.11

0 110 561

## FIG_12

## FIG_13

## FIG_14

7